(19) **Europäisches Patentamt / European Patent Office / Office européen des brevets**

(11) **EP 4 683 001 A1**

(12) **EUROPEAN PATENT APPLICATION**
published in accordance with Art. 153(4) EPC

(43) Date of publication:
**21.01.2026 Bulletin 2026/04**

(21) Application number: **24929406.7**

(22) Date of filing: **03.09.2024**

(51) International Patent Classification (IPC):
**H01M 4/66** (2006.01) **H01M 4/13** (2010.01)
**H01M 10/0525** (2010.01)

(52) Cooperative Patent Classification (CPC):
**Y02E 60/10**

(86) International application number:
**PCT/CN2024/116647**

(87) International publication number:
**WO 2025/222728 (30.10.2025 Gazette 2025/44)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **25.04.2024 CN 202410507351**

(71) Applicant: **Eve Energy Co., Ltd.**
**Huizhou Guangdong 516000 (CN)**

(72) Inventors:
• **HONG, Sifan**
**Huizhou, Guangdong 516000 (CN)**
• **WU, Yongxuan**
**Huizhou, Guangdong 516000 (CN)**
• **WANG, Li**
**Huizhou, Guangdong 516000 (CN)**
• **LIU, Rongjiang**
**Huizhou, Guangdong 516000 (CN)**
• **LIU, Yun**
**Huizhou, Guangdong 516000 (CN)**

(74) Representative: **Zhu, Puxing**
**Mars Universe IP**
**c/o Spaces**
**Mühldorfstraße 8**
**81671 München (DE)**

(54) **SAFETY COATING AND PREPARATION METHOD THEREFOR, AND COMPOSITE CURRENT COLLECTOR**

(57) A safety coating, a preparation method thereof and a composite current collector are provided. The safety coating includes, by weight parts, 30 to 50 parts of a phosphate material, 1 to 5 parts of a conductive agent, 10 to 30 parts of a binder, and 10 to 20 parts of a solvent. The phosphate material has a chemical formula of $LiFe_{1-x-y}Mn_xM_yPO_4$, in which $0<x<1$, $0<y\leq0.1$, $0<x+y<1$, and M is selected from at least one of Cr, Mg, Ti, Al, Zn, W, Nb, or Zr.

EP 4 683 001 A1

**Description**

This application claims priority to Chinese Patent Application No. 202410507351.5, filed on April 25, 2024, and the entire disclosures of the above applications are incorporated herein by reference.

TECHNICAL FIELD

The present disclosure relates to the field of lithium ion batteries, and more particularly, to a safety coating, a preparation method thereof, and a composite current collector, and more particularly, to a safety coating, a preparation method thereof, and application thereof in preparing a positive electrode composite current collector or/and a negative electrode composite current collector.

BACKGROUND

Due to the advantages of high energy density, long cycle life, no memory effect, and environmental friendliness, lithium ion batteries are widely used in portable electronic products, energy storage devices, and new energy vehicles. With the advent of the mobile phone 5G era and the development of new energy vehicles with extended range, the energy density of lithium-ion batteries is also required to be higher. However, higher energy density of the lithium-ion battery causes reduced safety performance. Power batteries with poor safety performance have triggered multiple spontaneous combustion and explosion incidents in electric and hybrid vehicles, significantly constraining the development of the lithium-ion battery in the new energy field.

The potential safety hazard caused by contact of the positive electrode and negative electrode of the lithium ion battery remains a persistent concern, with limited effective solutions. Studies have shown that a safety coating may be added to isolate electrodes and to provide high resistance and low heat generation during short circuits, thereby improving safety. Considering the practical application requirements, the safety coating must substantially improve cell safety while minimally impacting energy density. For example, Chinese Patent Application Publication No. CN 113314717 A discloses a composite current collector and a preparation method and application thereof by applying a lithium manganese iron phosphate coating with a thickness of 2 $\mu$m to 5 $\mu$m on an aluminum foil. While the safety coating balances energy density and safety, it adversely affects long-term cycling and high-rate discharge performance of the battery.

Technical problems

Existing safety coatings applied on the current collectors in the related art fail to simultaneously satisfy all critical requirements such as battery safety enhancement, minimal impact on energy density, superior long-term cycling performance, and excellent high-rate discharge capability.

TECHNICAL SOLUTIONS

In a first aspect, embodiments of the present disclosure provide a safety coating prepared from a coating material including, based on weight parts, 30 to 50 parts of a phosphate material, 1 to 5 parts of a conductive agent, 10 to 30 parts of a binder, and 10 to 20 parts of a solvent. The phosphate material has a formula of $LiFe_{1-x-y}Mn_xM_yPO_4$, wherein 0<x<1, 0<y$\leq$0.1, 0<x+y<1, M is selected from at least one of Cr, Mg, Ti, Al, Zn, W, Nb, or Zr.

In a second aspect, embodiments of the present disclosure provide a method for preparing a safety coating including mixing the coating material to obtain a coating slurry, then applying the coating slurry to a substrate surface, and drying the coating slurry to obtain the safety coating on the substrate surface.

In a third aspect, embodiments of the present disclosure provide a composite current collector including a current collector substrate and a safety coating disposed on opposite surfaces of the current collector substrate. The safety coating is the safety coating described above. The thickness of the current collector substrate is 10 to 15 $\mu$m and the thickness of the safety coating is 2 to 5$\mu$m.

BENEFICIAL EFFECTS

1. The safety coating provided in the present disclosure includes a phosphate material, a conductive agent, a binder and a solvent, where the phosphate material is a metal-doped lithium manganese iron phosphate material, and the metal is at least one of Cr, Mg, Ti, Al, Zn, W, Nb or Zr. By controlling the addition amount of each raw material, the adhesion between the safety coating and the current collector substrate can be increased, and the peeling force between the active material layer and the safety coating can be effectively improved. Further, during internal short circuits induced by nail penetration or crushing in cells, the direct contact of the positive aluminum foil and the negative copper foil can be effectively avoided, the safety coating therefore can effectively improve the safety performance of the battery without changing the material system, the electrode sheet performance and the product performance. In addition, the safety coating minimally impacts energy density while enabling superior long-term cycling and high-rate discharge performance, facilitating widespread adoption.

2. The present disclosure provides a method for preparing a safety coating, which includes mixing all raw materials to obtain a coating slurry, then coating the coating slurry on the surface of a substrate, and drying the coating slurry to obtain the safety coating on the surface of the substrate. The preparation method is simple, operationally convenient, and suitable for industrial scale-up.

3. The present disclosure provides a composite current collector provided with a safety coating, where the safety coating is applied to the surface of the current collector substrate. The safety coating is added to the surface of the current collector substrate, establishing electrical isolation between electrodes of the prepared battery. During short-circuit events, it provides high resistance and low heat generation, significantly enhancing safety while maintaining high electrochemical performance.

## DETAILED DESCRIPTION

In order to make the objective, technical solutions, and advantages of the present disclosure clear, embodiments of the present disclosure will be described in further detail with reference to the following examples. It is to be understood that the specific embodiments described herein are merely illustrative of the present disclosure and are not intended to limit the present disclosure.

In some embodiments of the present disclosure, M is Mg. The addition of the magnesium element renders the safety coating exhibiting better security properties.

In some embodiments of the present disclosure, the particle size D99 of the phosphate material is less than or equal to 10 $\mu$m, and/or the particle size D50 of the phosphate material is less than or equal to 8 $\mu$m. Alternatively, the particle size D99 of the phosphate material is 2 $\mu$m to 10 $\mu$m, and the particle size D50 thereof is 2 $\mu$m to 8 $\mu$m. Alternatively, the particle size D99 of the phosphate material is 5 $\mu$m to 10 $\mu$m, and the particle size D50 thereof is 5 $\mu$m to 8 $\mu$m.

In some embodiments of the present disclosure, the safety coating further comprises 1 to 10 parts of a fast ion conductor having an ionic conductivity greater than or equal to $10^{-6}$ S·cm$^{-1}$. It has been found from a large number of experimental studies that by adding the specific amount of the fast ion conductor, excellent safety performance of the safety coating can be ensured, while ensuring better long-term cycling and high-rate discharge effect of the battery. At the same time, it has been found that controlling the ionic conductivity of the fast ion conductor to be greater than or equal to $10^{-6}$ S·cm$^{-1}$ can provide significant performance enhancement of the battery, while the improvement becomes limited when the ionic conductivity below this range.

In some embodiments of the present disclosure, the fast ion conductor is an inorganic compound, a single polycrystalline organic compound, or a solid electrolyte. In some embodiments of the present disclosure, the fast ion conductor is selected from at least one of AgI, Ag$_2$S, CuBr, or SrBr$_2$.

In some embodiments of the present disclosure, the ratio of the fast ion conductor to the phosphate material is (0.03 to 0.2): 1.

It has been found that the ratio of the fast ion conductor to the phosphate material has a close influence on the safety and electrical performance of the battery, and a better technical effect can be obtained within the suitable range.

In some embodiments of the present disclosure, the ratio of the fast ion conductor to the phosphate material is (0.15 to 0.2): 1.

In some embodiments of the present disclosure, the coating further comprises 10 to 20 parts of ceramic particles. In some specific embodiments, the ceramic particles are at least one of boehmite, magnesium oxide, titanium oxide, zirconium oxide, silicon oxide, or yttrium oxide. The ceramic particles in the coating exhibit chemical inertness, resistance to thermal decomposition, and flame retardancy. Simultaneously, they reduce the power when a short circuit occurs in the battery cell, thereby enhancing battery safety.

In some embodiments of the present disclosure, the conductive agent is at least one of graphene, carbon nanotubes, conductive carbon black, or carbon microspheres. The conductive agent contributes to improving the overall conductive performance of the battery. The binder is an oil-based or water-based polymer binder. Specifically, the binder includes but is not limited to at least one of carboxymethyl cellulose, acrylic acid, styrene, butadiene, polyvinylidene fluoride, or polyacrylate. The solvent is N-methyl pyrrolidone and/or water.

In some embodiments of the present disclosure, the substrate is at least one of a microporous aluminum foil and a reticulated aluminum foil.

In yet another exemplary embodiment of the present disclosure, there is provided the use of the safety coating in the preparation of a composite current collector, where the safety coating is applied to the surface of the current collector substrate.

Specifically, the composite current collector is a positive-electrode composite current collector or a negative-electrode composite current collector.

The present disclosure provides the use of the safety coating in the preparation of the positive-electrode composite current collector and/or the negative-electrode composite current collector. The safety coating is applied to the surface of the current collector substrate. By incorporating the safety coating, the positive electrode and the negative electrode of the prepared battery are separated. During short-circuit incidents, the safety coating provides high resistance and consequently low heat generation, significantly enhancing battery safety while retaining high electrochemical performance of the battery.

In yet another exemplary embodiment of the present disclosure, there is provided an electrode sheet including the composite current collector as described above.

In yet another exemplary embodiment of the present disclosure, there is provided a lithium ion battery including the above-described electrode sheet.

In the following examples, the particle size D99 of the phosphate materials is less than or equal to 10 $\mu$m, and the particle size D50 thereof is less than or equal to 8 $\mu$m. The solvent is N-methyl pyrrolidone and/or water to completely dissolve the other starting materials.

Example 1

Safety coating

The safety coating includes 40 parts of $LiFe_{0.72}Mn_{0.2}Mg_{0.08}PO_4$ as the phosphate material, 3 parts of graphene as the conductive agent, 20 parts of carboxymethyl cellulose as the binder, and 15 parts of the solvent, where the particle size D99 of the phosphate material is 10 $\mu$m and D50 is 8 $\mu$m.

Preparation of positive electrode composite current collector

The phosphate material, the conductive agent, the binder, and the solvent were mixed and stirred uniformly to obtain a safety coating slurry.

The aluminum foil having a thickness of 12 $\mu$m was immersed in acetone and ethanol for 5 min respectively, then subjected to ultrasonic cleaning with deionized water for 30 min, and then immersed in an acetic acid solution having a concentration of 0.1 mol/L for 5 min to remove the oxide on the surface, and dried under vacuum for later use.

After the aluminum foil was cleaned and dried, the coating slurry was applied to two opposing surfaces of the aluminum foil and dried to form the safety coating having a thickness of 3 $\mu$m, so as to obtain the composite current collector.

Example 2

Safety coating

The safety coating includes 30 parts of $LiFe_{0.6}Mn_{0.3}Mg_{0.05}Cr_{0.05}PO_4$ as the phosphate material, 1 part of conductive carbon black as the conductive agent, 10 parts of acrylic acid as the binder, 10 parts of the solvent, and 10 parts of ceramic particles, where the particle size D99 of the phosphate material is 9 $\mu$m and D50 is 8 $\mu$m.

Preparation of positive electrode composite current collector

The phosphate material, the conductive agent, the binder, the ceramic particles, and the solvent were mixed and stirred uniformly to obtain a safety coating slurry.

The aluminum foil having a thickness of 12 $\mu$m was immersed in acetone and ethanol for 5 min respectively, then subjected to ultrasonic cleaning with deionized water for 30 min, and then immersed in an acetic acid solution having a concentration of 0.1 mol/L for 5 min to remove the oxide on the surface, and dried under vacuum for later use.

After the aluminum foil was cleaned and dried, the coating slurry was applied to two opposing surfaces of the aluminum foil and dried to form the safety coating having a thickness of 3 $\mu$m, so as to obtain the composite current collector.

Example 3

Safety coating

The safety coating includes 50 parts of $LiFe_{0.5}Mn_{0.4}Mg_{0.06}Zn_{0.04}PO_4$ as the phosphate material, 5 parts of carbon nanotubes as the conductive agent, 30 parts of styrene as the binder, 20 parts of the solvent, and 20 parts of ceramic particles, where the particle size D99 of the phosphate material is 10 $\mu$m and D50 is 6 $\mu$m.

Preparation of positive electrode composite current collector

The phosphate material, the conductive agent, the ceramic particles, the binder, and the solvent were mixed and stirred uniformly to obtain a safety coating slurry.
The aluminum foil having a thickness of 12 $\mu$m was immersed in acetone and ethanol for 5 min respectively, then subjected to ultrasonic cleaning with deionized water for 30 min, and then immersed in an acetic acid solution having a concentration of 0.1 mol/L for 5 min to remove the oxide on the surface, and dried under vacuum for later use.
After the aluminum foil was cleaned and dried, the coating slurry was applied to two opposing surfaces of the aluminum foil and dried to form the safety coating having a thickness of 3 $\mu$m, so as to obtain the composite current collector.

Example 4

Safety coating

The safety coating includes 40 parts of $LiFe_{0.72}Mn_{0.2}Mg_{0.08}PO_4$ as the phosphate material, 3 parts of graphene as the conductive agent, 20 parts of carboxymethyl cellulose as the binder, 15 parts of the solvent, and 6 parts of AgI as the fast ion conductor, where the particle size D99 of the phosphate material is 6 $\mu$m and the D50 is 6 $\mu$m, and the ionic conductivity of the fast ionic conductor is $10^{-6}$ S·cm$^{-1}$.

Preparation of positive electrode composite current collector

The phosphate material, the conductive agent, the fast ion conductor, the binder, and the solvent were mixed and stirred uniformly to obtain a safety coating slurry.
The aluminum foil having a thickness of 12 $\mu$m was immersed in acetone and ethanol for 5 min respectively, then subjected to ultrasonic cleaning with deionized water for 30 min, and then immersed in an acetic acid solution having a concentration of 0.1 mol/L for 5 min to remove the oxide on the surface, and dried under vacuum for later use.
After the aluminum foil was cleaned and dried, the coating slurry was applied to two opposing surfaces of the aluminum foil and dried to form the safety coating having a thickness of 3 $\mu$m, so as to obtain a composite current collector.

Example 5

Safety coating

The safety coating includes 30 parts of $LiFe_{0.44}Mn_{0.5}Ti_{0.03}Al_{0.03}PO_4$ as the phosphate material, 1 part of conductive carbon black as the conductive agent, 10 parts of acrylic acid as the binder, 10 parts of the solvent, 10 parts of ceramic particles, and 1 part of AgI as the fast ion conductor, where the particle size D99 of the phosphate material is 9 $\mu$m, the D50 is 8 $\mu$m, and the ionic conductivity of the fast ion conductor is $10^{-5}$ S·cm$^{-1}$.

Preparation of positive electrode composite current collector

The phosphate material, the conductive agent, the ceramic particles, the fast ion conductor, the binder, and the solvent were mixed and stirred uniformly to obtain a safety coating slurry.
The aluminum foil having a thickness of 12 $\mu$m was immersed in acetone and ethanol for 5 min respectively, then subjected to ultrasonic cleaning with deionized water for 30 min, and then immersed in an acetic acid solution having a concentration of 0.1 mol/L for 5 min to remove the oxide on the surface, and dried under vacuum for later use.
After the aluminum foil was cleaned and dried, the coating slurry was applied to two opposing surfaces of the aluminum foil and dried to form the safety coating having a thickness of 3 $\mu$m, so as to obtain a composite current collector.

Example 6

Safety coating

The safety coating includes 50 parts of $LiFe_{0.8}Mn_{0.1}W_{0.03}Zr_{0.07}PO_4$ as the phosphate material, 5 part of carbon nanotubes as the conductive agent, 30 parts of styrene as the binder, 20 parts of the solvent, 20 parts of ceramic particles, and 10 parts of AgI as the fast ion conductor, where the particle size D99 of the phosphate material is 8 $\mu$m, D50 is 7 $\mu$m, and the ionic conductivity of the fast ion conductor is $10^{-6}$ S·cm$^{-1}$.

Preparation of positive electrode composite current collector

The phosphate material, the conductive agent, the ceramic particles, the fast ion conductor, the binder, and the solvent were mixed and stirred uniformly to obtain a safety coating slurry.

The aluminum foil having a thickness of 12 $\mu$m was immersed in acetone and ethanol for 5 min respectively, then subjected to ultrasonic cleaning with deionized water for 30 min, and then immersed in an acetic acid solution having a concentration of 0.1 mol/L for 5 min to remove the oxide on the surface, and dried under vacuum for later use.

After the aluminum foil was cleaned and dried, the coating slurry was applied to two opposing surfaces of the aluminum foil and dried to form the safety coating having a thickness of 3 $\mu$m, so as to obtain a composite current collector.

Comparative Example 1

The safety coating was not applied in Comparative Example 1, compared with Example 1.

The aluminum foil having a thickness of 12 $\mu$m was immersed in acetone and ethanol for 5 min respectively, then subjected to ultrasonic cleaning with deionized water for 30 min, and then immersed in an acetic acid solution having a concentration of 0.1 mol/L for 5 min to remove the oxide on the surface, and dried under vacuum for later use as the positive electrode current collector.

Comparative Example 2

Compared with Example 1, the safety coating used in Comparative Example 2 includes a lithium manganese iron phosphate material, and the remainder is the same as in Example 1, specifically as follows:

Safety coating

The safety coating includes 40 parts of $LiFe_{0.8}Mn_{0.2}PO_4$ as the phosphate material, 3 parts of graphene as the conductive agent, 20 parts of carboxymethyl cellulose as the binder, and 15 parts of the solvent.

Preparation of positive electrode composite current collector

The phosphate material, the conductive agent, the binder, and the solvent were mixed and stirred uniformly to obtain a safety coating slurry.

The aluminum foil having a thickness of 12 $\mu$m was immersed in acetone and ethanol for 5 min respectively, then subjected to ultrasonic cleaning with deionized water for 30 min, and then immersed in an acetic acid solution having a concentration of 0.1 mol/L for 5 min to remove the oxide on the surface, and dried under vacuum for later use.

After the aluminum foil was cleaned and dried, the coating slurry was applied to two opposing surfaces of the aluminum foil and dried to form the safety coating having a thickness of 3 $\mu$m, so as to obtain the composite current collector.

Comparative Example 3

Compared with Example 4, the addition amount of the fast ion conductor was changed in Comparative Example 3 as follows:

Safety coating

The safety coating includes 36.8 parts of $LiFe_{0.72}Mn_{0.2}Mg_{0.08}PO_4$ as the phosphate material, 3 parts of graphene as the conductive agent, 20 parts of carboxymethyl cellulose as the binder, 15 parts of the solvent, and 9.2 parts of AgI as the fast ion conductor.

Preparation of positive electrode composite current collector

The phosphate material, the conductive agent, the fast ion conductor, the binder, and the solvent were mixed and stirred uniformly to obtain a safety coating slurry.

The aluminum foil having a thickness of 12 $\mu$m was immersed in acetone and ethanol for 5 min respectively, then subjected to ultrasonic cleaning with deionized water for 30 min, and then immersed in an acetic acid solution having a concentration of 0.1 mol/L for 5 min to remove the oxide on the surface, and dried under vacuum for later use.

After the aluminum foil was cleaned and dried, the coating slurry was applied to two opposing surfaces of the aluminum foil and dried to form the safety coating having a thickness of 3 $\mu$m, so as to obtain the composite current collector.

Comparative Example 4

Compared with Example 1, y value was changed in Comparative Example 4 as follows:

Safety coating

The safety coating includes 40 parts of $LiFe_{0.6}Mn_{0.2}Mg_{0.2}PO_4$ as the phosphate material, 3 parts of graphene as the conductive agent, 20 parts of carboxymethyl cellulose as the binder, and 15 parts of the solvent.

Preparation of positive electrode composite current collector

The phosphate material, the conductive agent, the binder, and the solvent were mixed and stirred uniformly to obtain a safety coating slurry.

The aluminum foil having a thickness of 12 $\mu$m was immersed in acetone and ethanol for 5 min respectively, then subjected to ultrasonic cleaning with deionized water for 30 min, and then immersed in an acetic acid solution having a concentration of 0.1 mol/L for 5 min to remove the oxide on the surface, and dried under vacuum for later use.

After the aluminum foil was cleaned and dried, the coating slurry was applied to two opposing surfaces of the aluminum foil and dried to form the safety coating having a thickness of 3 $\mu$m, so as to obtain the composite current collector.

It was found from subsequent tests that a great amount of doped metal elements tends to cause instability of the structure of the phosphate material and failure of the material.

Test

(1) A positive electrode sheet was obtained by mixing the positive electrode active material (NCM811), the conductive carbon black SP, the binder PVDF in a mass ratio of 90: 5: 5, with NMP as a solvent, and applying the mixture to the current collectors obtained in Examples 1 to 6 and Comparative Examples 1 to 3 at an areal density of 170 g/m$^2$, and drying under vacuum at 90°C. The positive electrode sheets using different current collectors were tested for electrode sheet peel strength and membrane resistance.

(2) The resulting positive electrode sheet was combined with a graphite negative electrode (graphite: SP:CMC:SBR=94:2:2:2) to form a pouch cell with a capacity of 1.2 Ah, and the energy density of the cell and the maximum temperature rise during nail penetration were measured.

Cycle performance test

The lithium-ion batteries prepared in each of the Examples and Comparative Examples were charged to 3.6 V at a constant power of 0.6 P under the condition of 25°C. After standing for 10 min, the lithium-ion batteries were discharged to 2.4 V at a constant power of 0.6 P, and allowed to stand for 10 min. This was a charge-discharge cycle. In this manner, the capacity retention rate after 300 cycles of the battery was calculated.

Capacity retention rate (%) after 300 cycles of the lithium ion battery = discharge capacity of the 300th cycle/discharge capacity of the 2nd cycle $\times$100%.

High-rate discharge performance test

The battery undergone 6 cycles of 0.5C/0.5C after standing for 10 min at 25±2°C. Then, the battery was charged at a constant current and constant voltage of 0.5C, held at 25±2°C for 10 min, discharged at 3C current to the voltage of 2.0 V. Discharge energy efficiency was recorded.

The test results are shown in Table 1.

Table 1

| / | Peel strength (N/30 mm) | Energy density (Wh/kg) | Maximum temperature rise (°C) | Capacity retention rate after 300 cycles (100%) | Discharge energy efficiency (%) |
|---|---|---|---|---|---|
| Example 1 | 0.59 | 227 | 50 | 95.4 | 86.8 |
| Example 2 | 0.58 | 228 | 49 | 93.2 | 85.5 |
| Example 3 | 0.60 | 225 | 51 | 94.7 | 83.6 |
| Example 4 | 0.65 | 230 | 41 | 97.4 | 89.4 |
| Example 5 | 0.67 | 232 | 40 | 98.1 | 88.9 |
| Example 6 | 0.63 | 234 | 39 | 96.7 | 87.6 |
| Comparative Example 1 | 0.38 | 207 | 520 | 76.2 | 65.9 |
| Comparative Example 2 | 0.48 | 212 | 58 | 80.3 | 70.5 |
| Comparative Example 3 | 0.57 | 225 | 52 | 91.8 | 81.6 |
| Comparative Example 4 | 0.50 | 213 | 50 | 78.3 | 70.1 |

It can be seen from the above test results that in Examples 1 to 6 of the present disclosure, the peel force between the active material layer and the safety coating layer can be effectively improved, the peel strength can be up to 0.65 N/30 mm or more, the energy density can be up to 230 Wh/kg or more, and the maximum temperature rise in the nail penetration is 40°C or less. The addition of the fast ion conductors in Examples 4 to 6 can provide more outstanding effect.

Comparing the test data of Comparative Examples 1 to 4 with the test data of the Examples, it can be seen that coating the metal-doped lithium manganese iron phosphate material on the current collector substrate and controlling the addition amount of each raw material can effectively improve the safety performance of the battery, but also has little influence on the energy density, and can achieve the effects of long-term cycling and high-rate discharge of the battery, thus facilitating popularization and application.

The foregoing description is merely illustrative of the preferred embodiments of the present disclosure and is not intended to limit the present disclosure, and any modifications, equivalents, and improvements that fall within the spirit and principles of the present disclosure are intended to be included within the scope of the present disclosure.

**Claims**

1. A safety coating prepared from a coating material, the coating material comprising, based on weight parts:

   30 to 50 parts of a phosphate material; 1 to 5 parts of a conductive agent; 10 to 30 parts of a binder; and 10 to 20 parts of a solvent;
   wherein the phosphate material has a formula of $LiFe_{1-x-y}Mn_xM_yPO_4$, wherein 0<x<1, 0<y≤0.1, 0<x+y<1, M is selected from at least one of Cr, Mg, Ti, Al, Zn, W, Nb, or Zr.

2. The safety coating of claim 1, wherein M is Mg.

3. The safety coating of claim 1 or 2, wherein a particle size D99 of the phosphate material is less than or equal to 10 μm, and/or a particle size D50 of the phosphate material is less than or equal to 8 μm.

4. The safety coating of any one of claims 1 to 3, wherein the coating material further comprises 1 to 10 parts of a fast ion conductor having an ionic conductivity greater than or equal to $10^{-6}$ S·cm$^{-1}$.

5. The safety coating of claim 4, wherein a mass ratio of the fast ion conductor to the phosphate material is (0.03 to 0.2): 1.

6. The safety coating of claim 5, wherein the mass ratio of the fast ion conductor to the phosphate material is (0.15 to 0.2): 1.

7. The safety coating of any one of claims 1 to 6, wherein the coating material further comprises 10 to 20 parts of ceramic particles.

8. The safety coating of any one of claims 1 to 7, wherein the conductive agent is selected from at least one of graphene, carbon nanotubes, conductive carbon black, or carbon microspheres; and/or the binder is selected from at least one of carboxymethyl cellulose, acrylic acid, styrene, butadiene, polyvinylidene fluoride or polyacrylate; and/or the solvent is N-methyl pyrrolidone and/or water.

9. A method of preparing the safety coating of any one of claims 1 to 8, comprising:
mixing the coating material to obtain a coating slurry, applying the coating slurry to a surface of a substrate, followed by drying to obtain the safety coating on the surface of the substrate.

10. A composite current collector comprising a current collector substrate and a safety coating disposed on two opposite surfaces of the current collector substrate, wherein the safety coating is the safety coating of any one of claims 1 to 8, a thickness of the current collector substrate is 10 $\mu$m to 15 $\mu$m and a thickness of the safety coating is 2 $\mu$m to 5 $\mu$m,

11. A electrode sheet comprising a current collector, wherein the current collector is the composite current collector of claim 10.

12. A lithium ion battery comprising an electrode sheet, wherein the electrode sheet is the electrode sheet of claim 11.

## INTERNATIONAL SEARCH REPORT

| International application No. |
| --- |
| **PCT/CN2024/116647** |

### A. CLASSIFICATION OF SUBJECT MATTER

H01M4/66(2006.01)i;  H01M4/13(2010.01)i;  H01M10/0525(2010.01)i

According to International Patent Classification (IPC) or to both national classification and IPC

### B. FIELDS SEARCHED

Minimum documentation searched (classification system followed by classification symbols)

    IPC:  H01M4/-,H01M10/-

Documentation searched other than minimum documentation to the extent that such documents are included in the fields searched

Electronic data base consulted during the international search (name of data base and, where practicable, search terms used)

    CNABS, CNTXT, ENTXTC, VEN, WPABSC, CNKI, ISI_Web of Science: 涂层, 集流体, 磷酸盐, 导电剂, 磷酸铁锰锂, 磷酸锰铁锂, 掺杂, coating, current collector, phosphate, conductive agent, lithium iron manganese phosphate, doped, Cr, Mg, Ti, Al, Zn, W, Nb, Zr

### C. DOCUMENTS CONSIDERED TO BE RELEVANT

| Category* | Citation of document, with indication, where appropriate, of the relevant passages | Relevant to claim No. |
| --- | --- | --- |
| PX | CN 118431482 A (HUIZHOU EVE ENERGY CO., LTD.) 02 August 2024 (2024-08-02) claims 1-10, and description, paragraphs 29-31 | 1-12 |
| X | CN 117174853 A (ANHUI DEYI ENERGY TECHNOLOGY CO., LTD.) 05 December 2023 (2023-12-05) description, paragraphs 4-14 and 25-53 | 1-9 |
| A | CN 110400920 A (LINKDATA NEW ENERGY CO., LTD.) 01 November 2019 (2019-11-01) entire description | 1-12 |
| A | CN 116666644 A (ZHUHAI COSMX BATTERY CO., LTD.) 29 August 2023 (2023-08-29) entire description | 1-12 |
| A | US 2021399286 A1 (ZHUHAI COSMX BATTERY CO., LTD.) 23 December 2021 (2021-12-23) entire description | 1-12 |

☑ Further documents are listed in the continuation of Box C.      ☑ See patent family annex.

| | |
| --- | --- |
| *   Special categories of cited documents:<br>"A"   document defining the general state of the art which is not considered to be of particular relevance<br>"D"   document cited by the applicant in the international application<br>"E"   earlier application or patent but published on or after the international filing date<br>"L"   document which may throw doubts on priority claim(s) or which is cited to establish the publication date of another citation or other special reason (as specified)<br>"O"   document referring to an oral disclosure, use, exhibition or other means<br>"P"   document published prior to the international filing date but later than the priority date claimed | "T"   later document published after the international filing date or priority date and not in conflict with the application but cited to understand the principle or theory underlying the invention<br>"X"   document of particular relevance; the claimed invention cannot be considered novel or cannot be considered to involve an inventive step when the document is taken alone<br>"Y"   document of particular relevance; the claimed invention cannot be considered to involve an inventive step when the document is combined with one or more other such documents, such combination being obvious to a person skilled in the art<br>"&"   document member of the same patent family |

| Date of the actual completion of the international search | Date of mailing of the international search report |
| --- | --- |
| **03 January 2025** | **10 January 2025** |

| Name and mailing address of the ISA/CN | Authorized officer |
| --- | --- |
| **China National Intellectual Property Administration (ISA/CN)**<br>**China No. 6, Xitucheng Road, Jimenqiao, Haidian District, Beijing 100088** | |
| | Telephone No. |

Form PCT/ISA/210 (second sheet) (July 2022)

**EP 4 683 001 A1**

**INTERNATIONAL SEARCH REPORT**

| | International application No. |
|---|---|
| | **PCT/CN2024/116647** |

| C. | DOCUMENTS CONSIDERED TO BE RELEVANT | |
|---|---|---|
| Category* | Citation of document, with indication, where appropriate, of the relevant passages | Relevant to claim No. |
| A | CN 115692726 A (YANGZHOU NALI NEW MATERIAL TECHNOLOGY CO., LTD.) 03 February 2023 (2023-02-03)<br>entire description | 1-12 |

**Information on patent family members**

International application No.

**PCT/CN2024/116647**

| Patent document cited in search report | | | Publication date (day/month/year) | Patent family member(s) | | | Publication date (day/month/year) |
|---|---|---|---|---|---|---|---|
| CN | 118431482 | A | 02 August 2024 | None | | | |
| CN | 117174853 | A | 05 December 2023 | None | | | |
| CN | 110400920 | A | 01 November 2019 | None | | | |
| CN | 116666644 | A | 29 August 2023 | None | | | |
| US | 2021399286 | A1 | 23 December 2021 | EP | 3930044 | A1 | 29 December 2021 |
| | | | | EP | 3930044 | C0 | 24 April 2024 |
| CN | 115692726 | A | 03 February 2023 | None | | | |

Form PCT/ISA/210 (patent family annex) (July 2022)

12

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202410507351

- CN 113314717 A